# EUROPEAN PATENT SPECIFICATION

(11) **EP 3 904 601 B1**
(45) Date of publication and mention of the grant of the patent: **29.11.2023**
(21) Application number: 20735873.0
(22) Date of filing: 02.01.2020
(51) Int. Cl.: E02B 3/12, B29C 44/32, B29C 44/54, B32B 13/14, B32B 37/24, B32B 5/02, B32B 5/26, B32B 7/09, B32B 7/12

(54) **BREATHABLE GEOSYNTHETIC CLAY LINER AND PRODUCTION PROCESS THEREFOR**
ATMUNGSAKTIVE GEOSYNTHETISCHE TONSCHICHT UND HERSTELLUNGSVERFAHREN DAFÜR
REVÊTEMENT D'ARGILE GÉOSYNTHÉTIQUE PERMÉABLE À L'AIR ET SON PROCÉDÉ DE PRODUCTION

(30) Priority: 02.01.2019 CN 201910002398
(43) Date of publication of application: 03.11.2021
(73) Proprietor: Beijing Rechsand Science & Technology Group Co., Ltd, Beijing 100085 (CN); Renchsand Eco-Environment Protection Science and Technology Co., Ltd., Economic Development Zone, Yuexi County Anqing Anhui 246600 (CN)
(72) Inventor: QIN, Shengyi, Beijing 100085 (CN); MA, Zhikun, Beijing 100085 (CN); HU, Wenxing, Beijing 100085 (CN)
(74) Representative: Groth & Co. KB
(86) International application number: PCT/CN2020/070060
(87) International publication number: WO 2020/140933

(56) References cited:
- EP-A2- 0 362 193
- US-A- 5 346 566

## Description

### Technical Field

The present application relates to the technical field of ecological environment restoration, in particular to a breathable geosynthetic clay and production process thereof.

### Background

Water resources are particularly scarce in China, with a total amount of 28 trillion cubic meters, and per capita water resources of only 2,170 cubic meters, which is less than a quarter of the world average level. China is one of the 13 water-poor countries in the world. In China, the available water sources mainly include river water, freshwater lake water and shallow groundwater. For surface freshwater resources such as rivers and lakes, water loss is mainly due to evaporation and seepage. According to incomplete statistics, seepage accounts for about 80% of the water loss.

In order to solve the seepage problem of surface freshwater resources such as lakes, an anti-seepage layer is mainly used in the prior art, and the anti-seepage layer is a structural layer formed by treating anti-seepage materials at the bottom of an artificial lake. In a newly excavated artificial lake, water will leak due to the loose soil structure at the bottom of the lake. In order to prevent water from seepage, an anti-seepage layer structure is usually provided in the design drawing. Anti-seepage treatment can effectively control the seepage of the lake water, thus greatly reducing the loss of water. At present, geomembrane anti-seepage technology, mixed material anti-seepage technology and bentonite anti-seepage technology are mainly used.

However, the above three anti-seepage technologies mainly focus on the anti-seepage performance of the materials, but do not have too many requirements for the air permeability of the anti-seepage materials. In the prior art, a geosynthetic clay is filled with soil, which is not breathable and becomes viscous when meeting water. However, if the vertical communication between the earth and the air is blocked for a long time, oxygen content in the water body will decrease, and the self-purification function of the water body will also decrease, resulting in water quality deterioration. In order to solve the problem of difficulty in breathing while preventing seepage, the prior art CN103174107A discloses a breathable and impermeable bag for preventing seepage at the bottom of a river channel. The breathable and impermeable bag is composed of a breathable wall bag and breathable and impermeable particles filled therein. The breathable and impermeable bag has both anti-seepage performance and air permeability. However, due to good fluidity of the breathable and impermeable particles, they are easy to leak, and are inconvenient for construction. In addition, there is a lot of dust during the construction process, thus many inconveniences are caused to construction workers. The prior art US5346566A1 discloses a breathable geosynthetic clay liner according to the preamble of claim 1. This prior art discloses in particular a multi-layer article of manufacture including an intermediate layer of a water-swellable colloidal clay, such as bentonite, sandwiched between two layers of flexible sheet or fabric material wherein the two flexible layers of sheet or fabric material are structurally interconnected through the intermediate clay layer, such as by needle punching, after lubrication of the clay surface with a liquid, such as water, to interconnect fibers of one fabric layer to the other fabric layer at spaced locations over essentially the entire inner surface areas of both sheet or fabric material layers. The prior art EP0362193A2 discloses a plane element for sealing against the penetration of liquids and/or gases, in particular for the enclosure of dumps and for the insulation of structures, which has interconnected fabric webs and a filling introduced between these and in which it is envisaged that the two fabric webs (1) are fixed at a maximum distance areally by means of a continuous thread system (2) and the filling (3) consists of sealing wall compounds, preferably mineral, which are capable of swelling up.

### Summary

The purpose of the present application is to solve the problems in the prior art that the breathable and impermeable particles are easy to leak, and a lot of dust are generated during the construction process, and further to provide a breathable geosynthetic clay liner with convenient construction, high production efficiency, no dust during the construction process, and good air permeability and anti-seepage performance and a production process thereof.

In order to achieve the above purpose, the invention is defined by the breathable geosynthetic clay liner of claim 1 and by the production process of such liner of claim 9. In particular, the present application adopts the following technical solutions:
A breathable geosynthetic clay liner, comprises an upper breathable layer, a lower breathable layer, and a breathable and impermeable sand layer sandwiched between the upper breathable layer and the lower breathable layer;
the breathable and impermeable sand layer comprises a breathable and impermeable particle and an expansive particle, and the expansive particle is added in an amount of 0.1% to 1000% of the mass of the breathable and impermeable particle.

Preferably, the expansive particle has a particle size of 0.001mm-5mm.

Preferably, the expansive particle has a particle size of 0.075mm-5mm.

The expansive particle is added in an amount of 5%-200% of the mass of the breathable and impermeable particle.

Preferably, the expansive particle is a mixture of a first expansive particle having a particle size of 0.048mm-0.075mm and a second expansive particle having a particle size of 2.8mm-4mm.

Preferably, the expansive particle is at least one of bentonite and clay.

The expansive particle is a mixture of the bentonite and the clay, and the mass ratio of the bentonite to the clay is 1:0.1-200.

The breathable and impermeable particle comprises an aggregate and a hydrophobic film covering the aggregate.

The breathable and impermeable sand layer has a thickness of 1-30 mm.

The breathable and impermeable particle has a particle size of 0.045mm-1mm.

The hydrophobic film is present in an amount of 0.005-10 wt % of the aggregate.

Preferably, the hydrophobic film is a hydrophobic organic film, and the hydrophobic organic film is a film formed of one or more of a hydrophobic organic material selected from one or more of a hydrophobic epoxy resin, a hydrophobic phenolic resin, a hydrophobic polyurethane resin, a hydrophobic silicone resin, paraffin wax, and silane.

Preferably, the hydrophobic epoxy resin is one or more of a glycidyl ether epoxy resin, a glycidyl ester epoxy resin, a glycidyl amine epoxy resin, a linear aliphatic epoxy resin, a alicyclic epoxy resin, a polysulfide rubber modified epoxy resin, a polyamide resin modified epoxy resin, a polyvinyl tert-butyraldehyde modified epoxy resin, a nitrile rubber modified epoxy resin, a phenolic resin modified epoxy resin, a polyester resin modified epoxy resin, an urea melamine resin modified epoxy resin, a furfural resin modified epoxy resin, a vinyl resin modified epoxy resin, isocyanate modified epoxy resin, and silicone resin modified epoxy resin.

The hydrophobic phenolic resin is one or more of a xylene modified phenolic resin, an epoxy resin modified phenolic resin and a silicone modified phenolic resin.

Preferably, a curing agent is added to the hydrophobic organic film, and different curing agents are added to different organic materials, wherein:
for glycidyl ether epoxy resins, glycidyl ester epoxy resins, glycidyl amine epoxy resins, linear aliphatic epoxy resins, and alicyclic epoxy resins, polysulfide rubber modified epoxy resins, polyamide resin modified epoxy resins, polyvinyl tert-butyraldehyde modified epoxy resins, nitrile rubber modified epoxy resins, phenolic resin modified epoxy resins, polyester resin modified epoxy resins, urea melamine resin modified epoxy resins, furfural resin modified epoxy resins, vinyl resin modified epoxy resins, isocyanate modified epoxy resins, and silicone resin modified epoxy resins, the curing agent added therein in one or more of aliphatic amine, alicyclic amine, aromatic amine, polyamide, acid anhydride, and tertiary amine;
for xylene modified phenolic resins, epoxy resin modified phenolic resins and silicone modified phenolic resins, the curing agent added therein is hexamethylenetetramine;
for silicone resin, the curing agent is one or more of dibutyl tin dilaurate or N, N, N', N'-tetramethyl guanidine salt;
for hydrophobic polyurethane resins, the curing agent is the adduct of TDI and TMP, a prepolymer of TDI and hydroxyl-containing component, and a trimer of one-component moisture curing agent and TDI; and
for unsaturated polyesters, the curing agents added at room temperature are ketone peroxides and cobalt naphthenates; the curing agent added during heating is one or more of tert-butyl peroxybenzoates, peroxydicarbonates, dialkyl peroxides, tert-hexyl peroxy octanoate and diester peroxydicarbonate.

Preferably, the aggregate is selected from one or more of quartz sand, slag, ceramsite, glass bead, medical stone, volcanic rock, kaolin, and graphite.

The aggregate is medical stone, volcanic rock and kaolin in a mass ratio of 1:5-20:5-20.

Preferably, the breathable and impermeable particle is prepared by a method comprising the following steps:
1) heating the aggregate to a temperature of 50°C to 400°C;
2) adding the hydrophobic organic material and stirring evenly to make the aggregate coated on its surface to obtain a coated particle;
3) cooling, crushing, and sieving to obtain the breathable and impermeable particle.

Preferably, the step 2) further comprises a step of adding the expansive particle to the coated particle, and the expansive particle is at least one of bentonite and clay.

Preferably, the expansive particle is in an amount of 1-20% of the weight of the aggregate.

Preferably, the expansive particle has a particle size of 0.001mm-5mm.

Preferably, the upper air-permeable layer and/or the lower air-permeable layer are made of one or more materials selected from polyester fiber, polyethylene, polypropylene, polylactic acid, polycaprolactone, polyurethane, polyvinyl acetal, cellulose triacetate, glass fiber, and polytetrafluoroethylene.

Preferably, the upper breathable layer and the lower breathable layer are provided with a plurality of connection points, and the upper breathable layer and the lower breathable layer are connected by fiber at each connection point.

Preferably, the upper breathable layer is an upper breathable fiber cloth layer, and the lower breathable layer is a lower breathable fiber cloth layer.

The breathable fiber cloth mentioned in the present application is a hydrophobic breathable fiber cloth.

Preferably, the upper breathable layer and/or the lower breathable layer are breathable mesh structures.

Preferably, the upper breathable layer is a breathable fiber cloth layer, and the lower breathable layer is a woven cloth layer or a non-woven fabric layer.

The present application also provides a production process of the above-mentioned breathable geosynthetic clay liner, comprises the following steps:
1) laying a lower breathable layer;
2) laying a mixture of a breathable and impermeable particle and an expansive particle on the lower breathable layer, and scraping the mixture with a scraper to form a breathable and impermeable sand layer on the surface of the lower breathable layer;
3) laying an upper breathable layer on the breathable and impermeable sand layer;
4) fixedly connecting the upper breathable layer, the breathable and impermeable sand layer and the lower breathable layer through needle punching to form an integral body, thus obtaining a breathable geosynthetic clay liner.

Preferably, an adhesive layer is coated on the surface of the lower breathable layer.

Preferably, the adhesive layer is environment-friendly glue.

Preferably, the environment-friendly glue is one of acrylic resins and waterborne epoxy resins.

Preferably, the upper breathable layer is a breathable fiber cloth layer, the lower breathable layer is a woven cloth layer or a non-woven fabric layer; and the adhesive layer is environment-friendly glue.

Preferably, in the step 1), the adhesive layer is coated on a rotating roller, and then the lower breathable layer is laid on the rotating roller and transported forward with the rotating roller, so that the adhesive layer is coated on a lower surface of the lower breathable layer.

Preferably, the step 2) is: laying a mixture of a breathable and impermeable particle and an expansive particle on an upper surface of the lower breathable layer through a funnel arranged above the lower breathable layer, and scraping the mixture with a scraper to form a breathable and impermeable sand layer on the surface of the lower breathable layer.

Preferably, in the step 4), the upper breathable layer, the breathable and impermeable sand layer and the lower breathable layer are fixedly connected through needle punching with a hydrophobic thread to form an integral body, thus obtaining a breathable geosynthetic clay liner.

Preferably, the breathable and impermeable sand layer has a thickness of 1-30 mm. In the embodiments of the present application, the breathable and impermeable sand layer has a thickness of 3 mm, 6 mm or 9 mm.

Preferably, in the step 4), the fiber of the upper breathable layer is brought to the lower breathable layer through needle punching, and fixed into the lower breathable layer.

Preferably, in the step 4), the fiber of the upper breathable layer is brought to the lower breathable layer through needle punching, and fixed by the adhesive layer coated on the lower breathable layer. The needle used in the needle punching has a diameter of 0.3-0.5mm, and the distance between two adjacent needles is 0.8-1.2mm.

Preferably, a wool layer is laid on the surface of the upper breathable layer and/or the lower breathable layer.

Preferably, the wool layer may be woven from one or two of animal fur and chemical fibers.

Preferably, the chemical fiber is one or more of acrylic fiber, polyester fiber, and persian fiber.

The breathable geosynthetic clay liner described in the present application can also be bonded and fixed with the upper breathable layer, the lower breathable layer and the breathable and impermeable sand layer by welding.

The present application has achieved the following beneficial effects:
1) The breathable geosynthetic clay liner described in the present application has convenient construction, high production efficiency, and there is no dust during the construction process. Further, it has finer particles, controllable and less consumption, and low cost. The expansive particle is added in an amount of 0.1% to 1000% of the mass of the breathable and impermeable particles. Under this proportion, the breathable geosynthetic clay liner has better air permeability and better anti-seepage performance.
   Expansive particles are added to the breathable and impermeable sand layer, so as to provide better gaps between the sand particles, meanwhile the amount of breathable and impermeable particles is reduced. Further, the adding of expansive particles enhances the hydrophobic function of the breathable and impermeable sand layer, and avoids uneven settlement of particles in the breathable and impermeable sand layer, which is more conducive to construction. Meanwhile, the durability and air permeability of the breathable geosynthetic clay liner are improved. In addition, the adding of expansive particles can also reduce the thickness of the breathable and impermeable sand layer, thereby reducing the cost.
2) Preferably, the expansive particle is added in an amount of 5%-200% of the mass of the breathable and impermeable particle in the present application. Under this proportion, the breathable geosynthetic clay liner has better air permeability and better anti-seepage performance.
3) Preferably, bentonite and clay are added to the breathable and impermeable particles. When the mass ratio of the bentonite to the clay is 1:0.1-200, the breathable geosynthetic clay liner has better air permeability and waterproof performance.
4) Preferably, in the production process of the breathable geosynthetic clay liner of the present application, it is unexpectedly found that adding expandable particles can improve the breathability and waterproof performance of the breathable geosynthetic clay liner.
5) The production process of the breathable geosynthetic clay liner described in the present application is simple, and the upper breathable layer and lower breathable layer are connected through needle punching process, which solves the problems that the breathable and impermeable particles are difficult to construct, and there is a lot of dust during the construction process. The thickness of the breathable and impermeable sand layer in the present application can be adjusted by a scraper, and the thickness of the breathable and impermeable sand layer is the same as that of the scraper. In the present application, the thickness of the air permeable and impermeable sand layer is limited to 1-30 mm, and the breathable and impermeable sand layer in the upper breathable layer and the lower breathable layer should not be too thick, which may easily cause the final coil to be unable to roll.
   The needle in the needle punching described in the present application is provided with hangnails, and the needle plate moves vertically downwards to bring fibers in the upper breathable layer to the lower breathable layer and fix them with an environmental-friendly glue coated on a surface of the lower breathable layer. Meanwhile, when the needle plate moves upwards, the fibers in the lower breathable layer are brought to the upper breathable layer to connect of the fibers in the upper breathable layer and lower breathable layer, and to firmly fix the particles in the breathable and impermeable sand layer in the middle, thus reducing the fluidity of the particles in the breathable and impermeable sand layer. The frequency of inserting needle described in the present application can be adjusted according to the movement speed of the rotating roller below the lower breathable layer. The wool layer described in the present application can act as a reinforcing rib to further increase the strength of the breathable layer. Meanwhile, the hangnails on the needle can hook the fibers in the wool layer to connect the upper breathable layer and lower breathable layer and further fix the particles in the breathable and impermeable sand layer.
6) The breathable geosynthetic clay liner described in the present application has excellent waterproof performance and breathability, and can be widely used in fields such as land restoration, river regulation, lake regulation, roof seepage control of houses, desert farming, waterproofing of farmland or land.

### Brief Description of the Drawings

In order to make the technical solution of the present application more clear, drawings will be described briefly hereinafter.

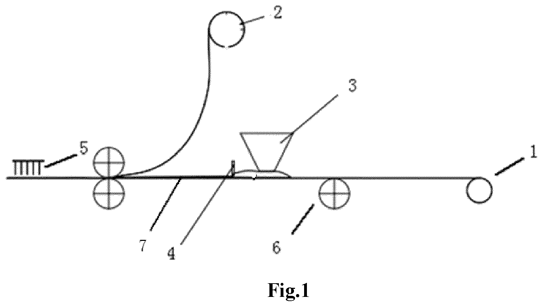

Figure 1 is a schematic diagram of the production process of the breathable geosynthetic clay liner, and the reference numbers are as follows:
1. lower breathable fiber cloth layer (lower breathable layer), 2. upper breathable fiber cloth layer (upper breathable layer), 3. funnel, 4. scraper, 5. needle plate, 6. rotating roller, 7. breathable and impermeable sand layer.

### Detailed Description of Embodiments

The following embodiments are provided for better understanding of the present application. The invention is defined by the appended claims.

If specific experimental steps or conditions are not specified in the embodiments, it can be carried out according to the conventional experimental steps described in the prior art. The reagents or instruments used without indicating the manufacturers are all conventional reagent products that are commercially available.

### Embodiment 1

The present embodiment provides a breathable geosynthetic clay liner, which comprises an upper breathable layer, a lower breathable layer, and a breathable and impermeable sand layer sandwiched between the upper breathable layer and the lower breathable layer. The upper breathable layer is an upper breathable fiber cloth layer, and the lower breathable layer is a lower breathable fiber cloth layer. The breathable and impermeable sand layer comprises a breathable and impermeable particle and an expansive particle, and the expansive particle is added in an amount of 0.1% of the mass of the breathable and impermeable particle. The breathable and impermeable particle has a particle size of 1mm; and the expansive particle is bentonite having a particle size of 5 mm.

The breathable and impermeable particle comprises an aggregate such as quartz sand and a polyvinyl tert-butyraldehyde modified epoxy resin covering the aggregate. The polyvinyl tert-butyraldehyde modified epoxy resin is 0.005 wt% of the mass of the quartz sand.

The breathable and impermeable particle is prepared by a method comprising the following steps:
1) heating quartz sand particles to a temperature of 50°C;
2)adding liquid polyvinyl tert-butyraldehyde modified epoxy resin, stirring thoroughly, then adding polyamide curing agent (accounting for 0.015wt% of the quartz sand), and stirring evenly, so that the epoxy resin is coated on the surface of the quartz sand particles, thus obtaining coated particles; followed by cooling, crushing and sieving to obtain breathable and impermeable particles.

The production process of the above-mentioned breathable geosynthetic clay liner comprises the following steps:
1) coating acrylic resin on a rotating roller 6, and a lower breathable layer 1 is laid on the rotating roller 6 and transported forward with the rotating roller 6, so that the acrylic resin is coated on a lower surface of the lower breathable layer 1;
2) laying a mixture of a breathable and impermeable particle and an expansive particle on an upper surface of the lower breathable fiber cloth layer 1 through a funnel 3 provided above the lower breathable fiber cloth layer 1, and scraping the mixture with a scraper 4 to form a breathable and impermeable sand layer 7 with a thickness of 1 mm;
3) laying an upper breathable fiber cloth layer 2 on the breathable and impermeable sand layer 7; and
4) fixedly connecting the upper breathable fiber cloth layer 2, the breathable and impermeable sand layer 7 and the lower breathable fiber cloth layer 1 through needle punching by using a needle on the needle plate 5 to form an integral body, wherein, the needle has a diameter of 0.3mm, and the distance between two adjacent needles is 0.8 mm; specifically, the upper breathable fiber cloth layer and lower breathable fiber cloth layer are penetrated by a needle installed on the needle plate 5, the needle is provided with hangnails, and the needle plate 5 moves vertically downwards to bring fibers of the upper breathable fiber cloth layer 2 to the lower breathable fiber cloth layer 1 and fix them with an environmental-friendly glue coated on a surface of the lower breathable fiber cloth layer 1, meanwhile, when the needle plate 5 moves upwards, fibers of the lower breathable fiber cloth layer 1 are brought to the upper breathable fiber cloth layer 2 to realize the connection of the fibers of the upper breathable fiber cloth layer and lower breathable fiber cloth layer, thus firmly fixing the particles in the breathable and impermeable sand layer 7 thereof, and reducing the fluidity to obtain a breathable geosynthetic clay liner.

### Embodiment 2

The present embodiment provides a breathable geosynthetic clay liner, which comprises an upper breathable layer, a lower breathable layer, and a breathable and impermeable sand layer sandwiched between the upper breathable layer and the lower breathable layer. The upper breathable layer is an upper breathable fiber cloth layer, and the lower breathable layer is a lower woven fabric. The breathable and impermeable sand layer comprises a breathable and impermeable particle and an expansive particle, and the expansive particle is added in an amount of 1000 % of the mass of the breathable and impermeable particle. The breathable and impermeable particle has a particle size of 0.045 mm; and the expansive particle is clay having a particle size of 0.001 mm.

The breathable and impermeable particle comprises an aggregate such as quartz sand and a polyamide resin modified epoxy resin covering the aggregate. The polyamide resin modified epoxy resin is 10 wt% of the mass of the quartz sand.

The polyamide resin modified epoxy resin accounts for 10 wt% of the mass of the quartz sand.

The breathable and impermeable particle is prepared by a method comprising the following steps:
1) heating quartz sand particles to a temperature of 400°C;
2) adding polyamide resin modified epoxy resin, stirring thoroughly, then adding alicyclic amine curing agent (accounting for 0.015wt% of the quartz sand), and stirring evenly, so that the epoxy resin is coated on the surface of the quartz sand particles, thus obtaining coated particles; followed by cooling, crushing and sieving to obtain breathable and impermeable particles.

The production process of the above-mentioned breathable geosynthetic clay liner comprises the following steps:
1) coating waterborne epoxy resin on a rotating roller 6, and a lower woven cloth is laid on the rotating roller 6 and transported forward with the rotating roller 6, so that the waterborne epoxy resin is coated on a lower surface of the lower woven cloth;
2) laying a mixture of a breathable and impermeable particle and an expansive particle on an upper surface of the lower woven cloth through a funnel 3 provided above the lower woven cloth, and scraping the mixture with a scraper 4 to form a breathable and impermeable sand layer 7 with a thickness of 30 mm;
3) laying an upper breathable fiber cloth layer 2 on the breathable and impermeable sand layer 7; and
4) fixedly connecting the upper breathable fiber cloth layer 2, the breathable and impermeable sand layer 7 and the lower woven cloth through needle punching by using a needle on the needle plate 5 to form an integral body, wherein, the needle has a diameter of 0.5 mm, and the distance between two adjacent needles is 1.2 mm; specifically, the upper breathable fiber cloth layer 2 and the lower woven cloth are penetrated by a needle installed on the needle plate 5, the needle is provided with hangnails, and the needle plate 5 moves vertically downwards to bring fibers of the upper breathable fiber cloth layer 2 to the lower woven cloth and fix them with an environmental-friendly glue coated on a surface of the lower woven cloth, meanwhile, the needle plate 5 moves upwards, repeating for many times to realize the connection of the fibers in the upper breathable fiber cloth layer and lower woven cloth, thus firmly fixing the particles in the breathable and impermeable sand layer 7 thereof, and reducing the fluidity, to obtain a breathable geosynthetic clay liner.

### Embodiment 3

The present embodiment provides a breathable geosynthetic clay liner, which comprises an upper breathable layer, a lower breathable layer, and a breathable and impermeable sand layer sandwiched between the upper breathable layer and the lower breathable layer. The upper breathable layer is an upper breathable fiber cloth layer, and the lower breathable layer is a lower breathable fiber cloth layer. The breathable and impermeable sand layer comprises a breathable and impermeable particle and an expansive particle, and the expansive particle is added in an amount of 5% of the mass of the breathable and impermeable particle. The breathable and impermeable particle has a particle size of 0.1mm; and the expansive particle is bentonite having a particle size of 0.075 mm.

The breathable and impermeable particle comprises an aggregate such as quartz sand and a polyamide resin modified epoxy resin covering the aggregate. The polyamide resin modified epoxy resin is 3 wt% of the mass of the quartz sand.

The breathable and impermeable particle is prepared by a method comprising the following steps:
1) heating quartz sand particles to a temperature of 70°C;
2) adding polyamide resin modified epoxy resin, stirring thoroughly, then adding alicyclic amine curing agent (accounting for 0.015wt% of the quartz sand), and stirring evenly, so that the epoxy resin is coated on the surface of the quartz sand particles, thus obtaining coated particles; followed by cooling, crushing and sieving, thus obtaining breathable and impermeable particles.

The production process of the above-mentioned breathable geosynthetic clay liner comprises the following steps:
1) coating waterborne epoxy resin on a rotating roller 6, and a lower breathable layer 1 is laid on the rotating roller 6 and transported forward with the rotating roller 6, so that the waterborne epoxy resin is coated on a lower surface of the lower breathable layer 1;
2) laying a mixture of a breathable and impermeable particle and an expansive particle on an upper surface of the lower breathable fiber cloth layer 1 through a funnel 3 provided above the lower breathable fiber cloth layer 1, and scraping the mixture with a scraper 4 to form a breathable and impermeable sand layer 7 with a thickness of 6 mm;
3) laying an upper breathable fiber cloth layer 2 on the breathable and impermeable sand layer 7; and
4) fixedly connecting the upper breathable fiber cloth layer 2, the breathable and impermeable sand layer 7 and the lower breathable fiber cloth layer 1 through needle punching by using a needle on the needle plate 5 to form an integral body, wherein, the needle has a diameter of 0.4mm, and the distance between two adjacent needles is 1.0 mm, specifically, the upper breathable fiber cloth layer and lower breathable fiber cloth layer are penetrated by a needle installed on the needle plate 5. The needle is provided with hangnails, and the needle plate 5 moves vertically downwards to bring fibers of the upper breathable fiber cloth layer 2 to the lower breathable fiber cloth layer 1 and fix them with an environmental-friendly glue coated on a surface of the lower breathable fiber cloth layer 1, meanwhile, when the needle plate 5 moves upwards, fibers of the lower breathable fiber cloth layer 1 are brought to the upper breathable fiber cloth layer 2 to realize the connection of the fibers of the upper breathable fiber cloth layer and lower breathable fiber cloth layer, thus firmly fixing the particles in the breathable and impermeable sand layer 7 thereof, and reducing the fluidity, to obtain a breathable geosynthetic clay liner.

### Embodiment 4

When compared with Embodiment 3, the only difference of Embodiment 4 lies in that the expansive particle is added in an amount of 200% of the mass of the breathable and impermeable particle.

### Embodiment 5

When compared with Embodiment 3, the only difference of Embodiment 5 lies in that the expansive particle is a mixture of the bentonite and the clay (the mass ratio of the bentonite to the clay is 1:0.1), and the expansive particle has a particle size of 0.075 mm.

### Embodiment 6

When compared with Embodiment 3, the only difference of Embodiment 6 lies in that the expansive particle is a mixture of the bentonite and the clay (the mass ratio of the bentonite to the clay is 1:200), and the expansive particle has a particle sizeof 0.075 mm.

### Embodiment 7

When compared with Embodiment 3, the only difference of Embodiment 7 lies in that the expansive particle is a mixture of the bentonite and the clay (the mass ratio of the bentonite to the clay is 1:50), and the expansive particle has a particle size of 0.075 mm.

### Embodiment 8

The present embodiment provides a breathable geosynthetic clay liner, which comprises an upper breathable layer, a lower breathable layer, and a breathable and impermeable sand layer sandwiched between the upper breathable layer and the lower breathable layer. The upper breathable layer is an upper breathable fiber cloth layer, and the lower breathable layer is a lower breathable fiber cloth layer. The breathable and impermeable sand layer comprises a breathable and impermeable particle and an expansive particle, and the expansive particle is added in an amount of 5 % of the mass of the breathable and impermeable particle. The breathable and impermeable particle has a particle size of 0.1mm; and the expansive particle is clay having a particle size of 0.075 mm.

The breathable and impermeable particle comprises an aggregate and a polyamide resin modified epoxy resin covering the aggregate. The aggregate is a mixture of medical stone, volcanic rock and kaolin with a mass ratio of 1:5:20. The polyamide resin modified epoxy resin is 3 wt% of the mass of the aggregate.

The breathable and impermeable particle is prepared by a method comprising the following steps:
1) heating quartz sand particles to a temperature of 70°C;
2) adding polyamide resin modified epoxy resin, stirring thoroughly, then adding alicyclic amine curing agent (accounting for 0.015wt% of the aggregate), and stirring evenly, so that the epoxy resin is coated on the surface of the aggregate, thus obtaining coated particles; followed by cooling, crushing and sieving, to obtain a breathable and impermeable particle.

The production process of the above-mentioned breathable geosynthetic clay liner comprises the following steps:
1) coating waterborne epoxy resin on a rotating roller 6, and a lower breathable layer 1 is laid on the rotating roller 6 and transported forward with the rotating roller 6, so that the waterborne epoxy resin is coated on a lower surface of the lower breathable layer 1;
2) laying a mixture of a breathable and impermeable particle and an expansive particle on an upper surface of the lower breathable fiber cloth layer 1 through a funnel 3 provided above the lower breathable fiber cloth layer 1, and scraping the mixture with a scraper 4 to form a breathable and impermeable sand layer 7 with a thickness of 6 mm;
3) laying an upper breathable fiber cloth layer 2 on the breathable and impermeable sand layer 7; and
4) fixedly connecting the upper breathable fiber cloth layer 2, the breathable and impermeable sand layer 7 and the lower breathable fiber cloth layer 1 through needle punching by using a needle on the needle plate 5 to form an integral body, wherein, the needle has a diameter of 0.4mm, and the distance between two adjacent needles is 1.0 mm; specifically, the upper breathable fiber cloth layer and lower breathable fiber cloth layer are penetrated by a needle installed on the needle plate 5, the needle is provided with hangnails, and the needle plate 5 moves vertically downwards to bring fibers in the upper breathable fiber cloth layer 2 to the lower breathable fiber cloth layer 1 and fix them with an environmental-friendly glue coated on a surface of the lower breathable fiber cloth layer 1, meanwhile, when the needle plate 5 moves upwards, fibers of the lower breathable fiber cloth layer 1 are brought to the upper breathable fiber cloth layer 2 to realize the connection of the fibers in the upper breathable fiber cloth layer and lower breathable fiber cloth layer, thus firmly fixing the particles in the breathable and impermeable sand layer 7thereof, and reducing the fluidity, to obtain a breathable geosynthetic clay liner.

### Embodiment 9

When compared with Embodiment 3, the only difference of Embodiment 9 lies in that the mass ratio of medical stone, volcanic rock and kaolin is 1:5:20.

### Embodiment 10

The present embodiment provides a breathable geosynthetic clay liner, which comprises an upper breathable layer, a lower breathable layer, and a breathable and impermeable sand layer sandwiched between the upper breathable layer and the lower breathable layer. The upper breathable layer is an upper breathable fiber cloth layer, and the lower breathable layer is a lower breathable fiber cloth layer. The breathable and impermeable sand layer comprises a breathable and impermeable particle and an expansive particle, and the expansive particle is added in an amount of 5 % of the mass of the breathable and impermeable particle. The breathable and impermeable particle has a particle size of 0.1mm; and the expansive particle is bentonite having a particle size of 0.075 mm.

The breathable and impermeable particle comprises an aggregate and a polyamide resin modified epoxy resin covering the aggregate. The aggregate is quartz sand. The polyamide resin modified epoxy resin is 3 wt% of the mass of the quartz sand.

The breathable and impermeable particles contain aggregate and polyamide resin modified epoxy resin coated with the aggregate.

The breathable and impermeable particle is prepared by a method comprising the following steps:
1) heating quartz sand particles to a temperature of 70°C;
2) adding polyamide resin modified epoxy resin, stirring thoroughly, then adding alicyclic amine curing agent (accounting for 0.015wt% of the quartz sand), and stirring evenly, so that the epoxy resin is coated on the surface of the quartz sand particles, thus obtaining coated particles. Then adding bentonite (the bentonite has a particle size of 5 mm, and is added in an amount of 1 wt% of the mass of the quartz sand) into the coated particles, stirring evenly, then cooling, crushing and sieving to obtain a breathable and impermeable particle.

The production process of the above-mentioned breathable geosynthetic clay liner comprises the following steps:
1) coating waterborne epoxy resin on a rotating roller 6, and a lower breathable layer 1 is laid on the rotating roller 6 and transported forward with the rotating roller 6, so that the waterborne epoxy resin is coated on a lower surface of the lower breathable layer 1;
2) laying a mixture of a breathable and impermeable particle and an expansive particle on an upper surface of the lower breathable fiber cloth layer 1 through a funnel 3 provided above the lower breathable fiber cloth layer 1, and scraping the mixture with a scraper 4 to form a breathable and impermeable sand layer 7 with a thickness of 6 mm;
3) laying an upper breathable fiber cloth layer 2 on the breathable and impermeable sand layer 7; and
4) fixedly connecting the upper breathable fiber cloth layer 2, the breathable and impermeable sand layer 7 and the lower breathable fiber cloth layer 1 through needle punching by using a needle on the needle plate 5 to form an integral body, wherein, the needle has a diameter of 0.4 mm, and the distance between two adjacent needles is 1.0 mm; specifically, the upper breathable fiber cloth layer and lower breathable fiber cloth layer are penetrated by a needle installed on the needle plate 5, the needle is provided with hangnails, and the needle plate 5 moves vertically downwards to bring fibers of the upper breathable fiber cloth layer 2 to the lower breathable fiber cloth layer 1 and fix them with an environmental-friendly glue coated on a surface of the lower breathable fiber cloth layer 1, meanwhile, when the needle plate 5 moves upwards, fibers of the lower breathable fiber cloth layer 1 are brought to the upper breathable fiber cloth layer 2 to realize the connection of the fibers in the upper breathable fiber cloth layer and lower breathable fiber cloth layer, thus firmly fixing the particles in the breathable and impermeable sand layer 7 thereof, and reducing the fluidity, to obtain a breathable geosynthetic clay liner is obtained.

### Embodiment 11

The present embodiment provides a breathable geosynthetic clay liner, which comprises an upper breathable layer, a lower breathable layer, and a breathable and impermeable sand layer sandwiched between the upper breathable layer and the lower breathable layer. The upper breathable layer is an upper breathable fiber cloth layer, and the lower breathable layer is a lower breathable fiber cloth layer. The breathable and impermeable sand layer comprises a breathable and impermeable particle and an expansive particle, and the expansive particle is added in an amount of 5 % of the mass of the breathable and impermeable particle. The breathable and impermeable particle has a particle size of 0.1mm; and the expansive particle is bentonite having a particle size of 0.075 mm.

The breathable and impermeable particle comprises an aggregate and a polyamide resin modified epoxy resin covering the aggregate. The aggregate is quartz sand. The polyamide resin modified epoxy resin is 3 wt% of the mass of the quartz sand.

The breathable and impermeable particle is prepared by a method comprising the following steps:
1) heating quartz sand particles to a temperature of 70°C;
2) adding polyamide resin modified epoxy resin, stirring thoroughly, then adding alicyclic amine curing agent (accounting for 0.015wt% of the quartz sand), and stirring evenly, so that the epoxy resin is coated on the surface of the quartz sand particles, thus obtaining coated particles, then adding bentonite (the bentonite has a particle size of 0.001 mm, and is added in an amount of 20 wt% of the mass of the quartz sand) into the coated particles, stirring evenly, then cooling, crushing and sieving to obtain a breathable and impermeable particle.

The production process of the above-mentioned breathable geosynthetic clay liner comprises the following steps:
1) coating waterborne epoxy resin on a rotating roller 6, and a lower breathable layer 1 is laid on the rotating roller 6 and transported forward with the rotating roller 6, so that the waterborne epoxy resin is coated on a lower surface of the lower breathable layer 1;
2) laying a mixture of a breathable and impermeable particle and an expansive particle on an upper surface of the lower breathable fiber cloth layer 1 through a funnel 3 provided above the lower breathable fiber cloth layer 1, and scraping the mixture with a scraper 4 to form a breathable and impermeable sand layer 7 with a thickness of 6 mm;
3) laying an upper breathable fiber cloth layer 2 on the breathable and impermeable sand layer 7; and
4) fixedly connecting the upper breathable fiber cloth layer 2, the breathable and impermeable sand layer 7 and the lower breathable fiber cloth layer 1 through needle punching by using a needle on the needle plate 5 to form an integral body, wherein, the needle has a diameter of 0.4 mm, and the distance between two adjacent needles is 1.0 mm; specifically, the upper breathable fiber cloth layer and lower breathable fiber cloth layer are penetrated by a needle installed on the needle plate 5, the needle is provided with hangnails, and the needle plate 5 moves vertically downwards to bring fibers in the upper breathable fiber cloth layer 2 to the lower breathable fiber cloth layer 1 and fix them with an environmental-friendly glue coated on a surface of the lower breathable fiber cloth layer 1, meanwhile, when the needle plate 5 moves upwards, fibers of the lower breathable fiber cloth layer 1 are brought to the upper breathable fiber cloth layer 2 to realize the connection of the fibers in the upper breathable fiber cloth layer and lower breathable fiber cloth layer, thus firmly fixing the particles in the breathable and impermeable sand layer 7 thereof, and reducing the fluidity, to obtain a breathable geosynthetic clay liner.

### Embodiment 12

When compared with Embodiment 3, the only difference of Embodiment 12 lies in that the surface of the lower breathable fiber cloth layer is not coated with waterborne epoxy resin, and the fibers of the upper breathable fiber cloth layer are brought to the lower breathable fiber cloth layer through needle punching and are fixed into the lower breathable fiber cloth layer.

### Embodiment 13

When compared with Embodiment 3, the only difference of Embodiment 13 lies in that a wool layer is laid on the surface of the upper breathable fiber cloth layer.

### Embodiment 14

When compared with Embodiment 3, the only difference of Embodiment 14 lies in that the expansive particle is a mixture of a first bentonite particle having a particle size of 0.048mm and a second bentonite particle having a particle size of 4mm (the mass ratio of the first bentonite particle and the second bentonite particle is 1: 1), and the breathable and impermeable sand layer has a thickness of 3 mm.

### Embodiment 15

When compared with Embodiment 3, the only difference of Embodiment 15 lies in that the expansive particle is a mixture of a first bentonite particle having a particle size of 0.075 mm and a second bentonite particle having a particle size of 2.8 mm (the mass ratio of the first bentonite particle and the second bentonite particle is 1:10), and the breathable and impermeable sand layer has a thickness of 9 mm.

### Embodiment 16

When compared with Embodiment 3, the only difference of Embodiment 16 lies in that the upper breathable layer is an upper breathable fiber cloth layer, and the lower breathable layer is a lower woven cloth .

### Embodiment 17

When compared with Embodiment 3, the only difference of Embodiment 17 lies in that the upper breathable layer is an upper breathable fiber cloth layer, and the lower breathable layer is a lower non-woven fabric.

### Embodiment 18

When compared with Embodiment 3, the only difference of Embodiment 18 lies in that in the step 4), the upper breathable fiber cloth layer, the breathable and impermeable sand layer and the lower breathable fiber cloth layer are fixedly connected through a conventional needle punching process with a hydrophobic thread to form an integral body, thus obtaining a breathable geosynthetic clay liner.

### Comparative example 1

When compared with Embodiment 3, the only difference of Comparative example 1 lies in that the breathable and impermeable sand layer in this comparative example only uses expansive particles, and no breathable and impermeable particles are added.

### Test example

The air permeability and waterproof performance of the breathable geosynthetic clay liner obtained in Embodiments 1-11 and Comparative Example 1 are tested, and the results are shown in table 1, so as to illustrate the hydrophobicity and air permeability of the breathable geosynthetic clay liner in the present application.

The principle of the air permeability detection method is to test by using a differential-pressure method, a certain gas pressure difference (1kpa) is maintained on both sides of the sample at room temperature, and the air permeability is calculated by measuring the change in the gas pressure on the low pressure side of the sample. As for the method of measuring the water blocking height, please see patent CN102890046A, which discloses a device and a method for detecting anti-seepage performance of anti-seepage sand.

| | Air permeability performance (1/min) | Water blocking height (cm) |
|---|---|---|
| Example 1 | 0.545 | 34 |
| Example 2 | 0.499 | 32 |
| Example 3 | 0.510 | 39 |
| Example 4 | 0.507 | 37 |
| Example 5 | 0.537 | 48 |
| Example 6 | 0.526 | 45 |
| Example 7 | 0.528 | 46 |
| Example 8 | 0.522 | 45 |
| Example 9 | 0.527 | 48 |
| Example 10 | 0.514 | 43 |
| Example 11 | 0.512 | 42 |
| Comparative example 1 | 0.464 | 29 |

Apparently, the aforementioned embodiments are merely examples illustrated for clearly describing the present application, rather than limiting the implementation ways thereof. The protection scope of the present invention is defined by the appended claims.

## Claims

1. A breathable geosynthetic clay liner, which comprises
an upper breathable layer (2), a lower breathable layer (1), and a breathable and impermeable sand layer (7) sandwiched between the upper breathable layer (2) and the lower breathable layer (1);
the breathable and impermeable sand layer (7) comprises a breathable and impermeable particle and an expansive particle, and the expansive particle is added in an amount of 0.1% to 1000% of the mass of the breathable and impermeable particle;
**characterized in that**
the expansive particle is a mixture of bentonite and clay, and the mass ratio of the bentonite to the clay is 1:0.1-200;
the breathable and impermeable particle comprises an aggregate and a hydrophobic film covering the aggregate; and
the aggregate is medical stone, volcanic rock and kaolin in a mass ratio of 1:5-20:5-20.

2. The breathable geosynthetic clay liner according to claim 1, **characterized in that** the expansive particle has a particle size of 0.001mm-5mm, preferably 0.075mm-5mm;
the expansive particle is added in an amount of 5%-200% of the mass of the breathable and impermeable particle;
preferably, the expansive particle is a mixture of a first expansive particle having a particle size of 0.048mm-0.075mm and a second expansive particle having a particle size of 2.8mm-4mm.

3. The breathable geosynthetic clay liner according to claim 1, **characterized in that** the hydrophobic film is present in an amount of 0.005-10 wt % of the aggregate;
the breathable and impermeable sand layer (7) has a thickness of 1-30 mm;
the breathable and impermeable particle has a particle size of 0.045mm-1mm.

4. The breathable geosynthetic clay liner according to claim 3, **characterized in that** the hydrophobic film is a hydrophobic organic film, and the hydrophobic organic film is a film formed of one or more of a hydrophobic organic material selected from one or more of a hydrophobic epoxy resin, a hydrophobic phenolic resin, a hydrophobic polyurethane resin, a hydrophobic silicone resin, paraffin wax, and silane;
preferably, the hydrophobic epoxy resin is one or more of a glycidyl ether epoxy resin, a glycidyl ester epoxy resin, a glycidyl amine epoxy resin, a linear aliphatic epoxy resin, and a alicyclic epoxy resin, a polysulfide rubber modified epoxy resin, a polyamide resin modified epoxy resin, a polyvinyl tert-butyraldehyde modified epoxy resin, a nitrile rubber modified epoxy resin, a phenolic resin modified epoxy resin, a polyester resin modified epoxy resin, an urea melamine resin modified epoxy resin, a furfural resin modified epoxy resin, a vinyl resin modified epoxy resin, isocyanate modified epoxy resin, and silicone resin modified epoxy resin;
the hydrophobic phenolic resin is one or more of a xylene modified phenolic resin, an epoxy resin modified phenolic resin and a silicone modified phenolic resin.

5. The breathable geosynthetic clay liner according to any one of claims 1-4, **characterized in that** the breathable and impermeable particle is prepared by a method comprising the following steps:
1) heating the aggregate to a temperature of 50°C to 400°C;
2) adding the hydrophobic organic material and stirring evenly to make the aggregate coated on its surface to obtain a coated particle;
3) cooling, crushing, and sieving to obtain the breathable and impermeable particle.

6. The breathable geosynthetic clay liner according to claim 5, **characterized in that** the step 2) further comprises a step of adding the expansive particle to the coated particle;
the expansive particle is in an amount of 1-20% of the weight of the aggregate; and
the expansive particle has a particle size of 0.001mm-5mm.

7. The breathable geosynthetic clay liner according to any one of claims 1-4, **characterized in that** the upper breathable layer (2) and/or the lower breathable layer (1) are made of one or more materials selected from polyester fiber, polyethylene, polypropylene, polylactic acid PLA, polycaprolactone, polyurethane, polyvinyl acetal, cellulose triacetate, glass fiber, and polytetrafluoroethylene.

8. The breathable geosynthetic clay liner according to any one of claims 1-4, **characterized in that** the upper breathable layer (2) and the lower breathable layer (1) are provided with a plurality of connection points, and the upper breathable layer (2) and the lower breathable layer (1) are connected by fiber at each connection point.

9. A production process of the breathable geosynthetic clay liner according to any one of claims 1-8, **characterized by** comprising the following steps:
1) laying a lower breathable layer (1);
2) laying a mixture of a breathable and impermeable particle and an expansive particle on the lower breathable layer (1), and scraping the mixture with a scraper (4) to form a breathable and impermeable sand layer (7) on the surface of the lower breathable layer (1);
3) laying an upper breathable layer (2) on the breathable and impermeable sand layer (7);
4) fixedly connecting the upper breathable layer (2), the breathable and impermeable sand layer (7) and the lower breathable layer (1) through needle punching to form an integral body, thus obtaining a breathable geosynthetic clay liner.

10. The production process according to claim 9, **characterized by** an adhesive layer is coated on the surface of the lower breathable layer (1), and/or, a wool layer is laid on the surface of the upper breathable layer (2) and/or the lower breathable layer (1);
preferably, in the step 1), the adhesive layer is coated on a rotating roller (6), and then the lower breathable layer (1) is laid on the rotating roller (6) and transported forward with the rotating roller (6), so that the adhesive layer is coated on a lower surface of the lower breathable layer (1).

11. The production process according to claim 10, **characterized in that** the upper breathable layer (2) is a breathable fiber cloth layer, and the lower breathable layer (1) is a woven cloth layer or a non-woven fabric layer; and
the adhesive layer is environment-friendly glue.

12. The production process according to claim 10 or 11, **characterized in that**,
in the step 4), the upper breathable layer (2), the breathable and impermeable sand layer (7) and the lower breathable layer (1) are fixedly connected through needle punching with a hydrophobic thread to form an integral body, thus obtaining a breathable geosynthetic clay liner; or
in the step 4), the fiber of the upper breathable layer (2) is brought to the lower breathable layer (1) through needle punching, and fixed by the adhesive layer coated on the lower breathable layer (1).

13. The production process according to claim 9, **characterized in that**, in the step 4), the fiber of the upper breathable layer (2) is brought to the lower breathable layer (1) through needle punching, and fixed into the lower breathable layer (1).

## Patentansprüche

1. Atmungsaktive geosynthetische Tonschicht, die eine obere atmungsaktive Schicht (2), eine untere atmungsaktive Schicht (1) und eine atmungsaktive und undurchlässige Sandschicht (7) umfasst, die zwischen der oberen atmungsaktiven Schicht (2) und der unteren atmungsaktiven Schicht (1) liegt;
wobei die atmungsaktive und undurchlässige Sandschicht (7) ein atmungsaktives und undurchlässiges Partikel und ein expansives Partikel umfasst, und das expansive Partikel in einer Menge von 0,1 % bis 1000 % der Masse des atmungsaktiven und undurchlässigen Partikels zugesetzt wird;
**dadurch gekennzeichnet, dass**
das expansive Partikel eine Mischung aus Bentonit und Ton ist und das Massenverhältnis des Bentonits zu dem Ton 1:0,1-200 beträgt;
das atmungsaktive und undurchlässige Partikel einen Zuschlagstoff und einen hydrophoben Film, der den Zuschlagstoff bedeckt, umfasst; und
der Zuschlagstoff medizinischer Stein, Vulkangestein und Kaolin in einem Massenverhältnis 1:5-20:5-20 ist.

2. Atmungsaktive geosynthetische Tonschicht nach Anspruch 1, **dadurch gekennzeichnet, dass** das expansive Partikel eine Partikelgröße von 0,001 mm - 5 mm, vorzugsweise 0,075 mm - 5 mm aufweist;
das expansive Partikel in einer Menge von 5 % - 200 % der Masse des atmungsaktiven und undurchlässigen Partikels zugesetzt wird; das expansive Partikel vorzugsweise eine Mischung aus einem ersten expansiven Partikel mit einer Partikelgröße von 0,048 mm - 0,075 mm und einem zweiten expansiven Partikel mit einer Partikelgröße von 2,8 mm - 4 mm ist.

3. Atmungsaktive geosynthetische Tonschicht nach Anspruch 1, **dadurch gekennzeichnet, dass** der hydrophobe Film in einer Menge von 0,005 - 10 Gew.-% des Zuschlagstoffs vorliegt;
die atmungsaktive und undurchlässige Sandschicht (7) eine Dicke von 1 - 30 mm aufweist;
das atmungsaktive und undurchlässige Partikel eine Partikelgröße von 0,045 mm - 1 mm aufweist.

4. Atmungsaktive geosynthetische Tonschicht nach Anspruch 3, **dadurch gekennzeichnet, dass** der hydrophobe Film ein hydrophober organischer Film ist und der hydrophobe organische Film ein Film ist, der aus einem oder mehreren hydrophoben organischen Materialien, ausgewählt aus einem oder mehreren von hydrophobem Epoxidharz, einem hydrophoben Phenolharz, einem hydrophoben Polyurethanharz, einem hydrophoben Silikonharz, Paraffinwachs und Silan gebildet ist;
das hydrophobe Epoxidharz vorzugsweise eines oder mehrere von einem Glycidylether-Epoxidharz, einem Glycidylester-Epoxidharz, einem Glycidylamin-Epoxidharz, einem linearen aliphatischen Epoxidharz und einem alicyclischen Epoxidharz, einem Polysulfidkautschuk-modifizierten Epoxidharz, einem Polyamidharz-modifiziertes Epoxidharz, einem Polyvinyl-tert-butyraldehyd-modifizierten Epoxidharz, einem Nitrilkautschukmodifizierten Epoxidharz, einem Phenolharz-modifizierten Epoxidharz, einem Polyesterharz-modifizierten Epoxidharz, einem Harnstoff-Melaminharz-modifizierten Epoxidharz, einem Furfuralharz-modifizierten Epoxidharz, einem Vinylharzmodifizierten Epoxidharz, einem Isocyanat-modifizierten Epoxidharz und einem Silikonharz-modifizierten Epoxidharz ist; das hydrophobe Phenolharz eines oder mehrere von einem Xylolmodifizierten Phenolharz, einem Epoxidharz-modifizierten Phenolharz und einem Silikon-modifizierten Phenolharz ist.

5. Atmungsaktive geosynthetische Tonschicht nach einem der Ansprüche 1-4, **dadurch gekennzeichnet, dass** das atmungsaktive und undurchlässige Partikel durch ein Verfahren hergestellt wird, das die folgenden Schritte umfasst:
1) Erhitzen des Zuschlagstoffs auf eine Temperatur von 50 °C bis 400 °C;
2) Zusetzen des hydrophoben organischen Materials und gleichmäßiges Rühren, um den Zuschlagstoff auf seiner Oberfläche zu beschichten und so ein beschichtetes Partikel zu erhalten;
3) Abkühlen, Zerkleinern und Sieben, um das atmungsaktive und undurchlässige Partikel zu erhalten.

6. Atmungsaktive geosynthetische Tonschicht nach Anspruch 5, **dadurch gekennzeichnet, dass** Schritt 2) ferner einen Schritt des Zusetzens des expansiven Partikels zu dem beschichteten Partikel umfasst;
das expansive Partikel in einer Menge von 1-20 % des Gewichts des Zuschlagstoffs vorliegt; und
das expansive Partikel eine Partikelgröße von 0,001 mm - 5 mm aufweist.

7. Atmungsaktive geosynthetische Tonschicht nach einem der Ansprüche 1-4,
**dadurch gekennzeichnet, dass** die obere atmungsaktive Schicht (2) und/oder die untere atmungsaktive Schicht (1) aus einem oder mehreren Materialien hergestellt sind, die aus Polyesterfaser, Polyethylen, Polypropylen, Polymilchsäure PLA, Polycaprolacton, Polyurethan, Polyvinylacetal, Cellulosetriacetat, Glasfaser und Polytetrafluorethylen ausgewählt sind.

8. Atmungsaktive geosynthetische Tonschicht nach einem der Ansprüche 1-4, **dadurch gekennzeichnet, dass** die obere atmungsaktive Schicht (2) und die untere atmungsaktive Schicht (1) mit einer Vielzahl von Verbindungspunkten versehen sind und die obere atmungsaktive Schicht (2) und die untere atmungsaktive Schicht (1) an jedem Verbindungspunkt durch Fasern verbunden sind.

9. Herstellungsverfahren der atmungsaktiven geosynthetischen Tonschicht nach einem der Ansprüche 1-8, **dadurch gekennzeichnet, dass** es die folgenden Schritte umfasst:
1) Auflegen einer unteren atmungsaktiven Schicht (1);
2) Auflegen einer Mischung aus einem atmungsaktiven und undurchlässigen Partikel und einem expansiven Partikel auf die untere atmungsaktive Schicht (1) und Abschaben der Mischung mit einem Schaber (4), um eine atmungsaktive und undurchlässige Sandschicht (7) auf der Oberfläche der unteren atmungsaktiven Schicht (1) zu bilden;
3) Auflegen einer oberen atmungsaktiven Schicht (2) auf die atmungsaktive und undurchlässige Sandschicht (7);
4) festes Verbinden der oberen atmungsaktiven Schicht (2), der atmungsaktiven und undurchlässigen Sandschicht (7) und der unteren atmungsaktiven Schicht (1) durch Vernadeln, um einen einstückigen Körper zu bilden, wodurch eine atmungsaktive geosynthetische Tonschicht erhalten wird.

10. Herstellungsverfahren nach Anspruch 9, **dadurch gekennzeichnet, dass** eine Klebeschicht auf die Oberfläche der unteren atmungsaktiven Schicht (1) aufgetragen wird und/oder eine Wollschicht auf die Oberfläche der oberen atmungsaktiven Schicht (2) und/oder die untere atmungsaktive Schicht (1) gelegt wird;
in dem Schritt 1) die Klebeschicht vorzugsweise auf eine rotierende Walze (6) aufgetragen und dann die untere atmungsaktive Schicht (1) auf die rotierende Walze (6) gelegt und mit der Walze (6) vorwärts transportiert wird, sodass die Klebeschicht auf eine Unterseite der unteren atmungsaktiven Schicht (1) aufgetragen wird.

11. Herstellungsverfahren nach Anspruch 10, **dadurch gekennzeichnet, dass** die obere atmungsaktive Schicht (2) eine atmungsaktive Faserstoffschicht ist und die untere atmungsaktive Schicht (1) eine gewebte Stoffschicht oder eine Vliesstoffschicht ist; und
die Klebeschicht umweltfreundlicher Kleber ist.

12. Herstellungsverfahren nach Anspruch 10 oder 11, **dadurch gekennzeichnet,**
**dass** in dem Schritt 4) die obere atmungsaktive Schicht (2), die atmungsaktive und undurchlässige Sandschicht (7) und die untere atmungsaktive Schicht (1) durch Vernadeln mit einem hydrophoben Faden fest verbunden werden, um einen einstückigen Körper zu bilden und so eine atmungsaktive geosynthetische Tonschicht zu erhalten; oder
in dem Schritt 4) die Faser der oberen atmungsaktiven Schicht (2) durch Vernadeln an die untere atmungsaktive Schicht (1) gebracht und durch die auf die untere atmungsaktive Schicht (1) aufgetragene Klebeschicht fixiert wird.

13. Herstellungsverfahren nach Anspruch 9, **dadurch gekennzeichnet, dass** in dem Schritt 4) die Faser der oberen atmungsaktiven Schicht (2) durch Vernadeln an die untere atmungsaktive Schicht (1) gebracht und in der unteren atmungsaktiven Schicht (1) fixiert wird.

## Revendications

1. Revêtement d'argile géosynthétique perméable à l'air, qui comprend une couche supérieure perméable à l'air (2), une couche inférieure perméable à l'air (1) et une couche de sable perméable à l'air et imperméable (7) intercalée entre la couche supérieure perméable à l'air (2) et la couche inférieure perméable à l'air (1) ;
la couche de sable perméable à l'air et imperméable (7) comprend une particule perméable à l'air et imperméable et une particule expansive, et la particule expansive est ajoutée en une quantité de 0,1 % à 1 000 % de la masse de la particule perméable à l'air et imperméable ;
**caractérisé en ce que**
la particule expansive est un mélange de bentonite et d'argile, et le rapport massique de la bentonite à l'argile est de 1:0,1 à 200 ;
la particule perméable à l'air et imperméable comprend un agrégat et un film hydrophobe recouvrant l'agrégat ; et l'agrégat est constitué de pierre médicale, de roche volcanique et de kaolin dans un rapport massique de 1:5-20:5-20.

2. Revêtement d'argile géosynthétique perméable à l'air selon la revendication 1, **caractérisé en ce que** la particule expansive a une taille de particule de 0,001 mm à 5 mm, de préférence de 0,075 mm à 5 mm ;
la particule expansive est ajoutée en une quantité de 5 % à 200 % de la masse de la particule perméable à l'air et imperméable ;
de préférence, la particule expansive est un mélange d'une première particule expansive ayant une taille de particule de 0,048 mm à 0,075 mm et d'une seconde particule expansive ayant une taille de particule de 2,8 mm à 4 mm.

3. Revêtement d'argile géosynthétique perméable à l'air selon la revendication 1, **caractérisé en ce que** le film hydrophobe est présent en une quantité de 0,005 à 10 % en poids de l'agrégat ;
la couche de sable perméable à l'air et imperméable (7) a une épaisseur de 1 à 30 mm ;
la particule perméable à l'air et imperméable a une taille de particule de 0,045 mm à 1 mm.

4. Revêtement d'argile géosynthétique perméable à l'air selon la revendication 3, **caractérisé en ce que** le film hydrophobe est un film organique hydrophobe, et le film organique hydrophobe est un film formé d'un ou plusieurs matériaux parmi un matériau organique hydrophobe choisi parmi un ou plusieurs matériaux parmi une résine époxy hydrophobe, une résine phénolique hydrophobe, une résine de polyuréthane hydrophobe, une résine de silicone hydrophobe, de la cire de paraffine et un silane ;
de préférence, la résine époxy hydrophobe est une ou plusieurs parmi une résine époxy d'éther glycidylique, une résine époxy d'ester glycidylique, une résine époxy d'amine glycidylique, une résine époxy aliphatique linéaire et une résine époxy alicyclique, une résine époxy modifiée par un caoutchouc de polysulfure, une résine époxy modifiée par une résine de polyamide, une résine époxy modifiée par du polyvinyl-tert-butyraldéhyde, une résine époxy modifiée par un caoutchouc de nitrile, une résine époxy modifiée par une résine phénolique, une résine époxy modifiée par une résine de polyester, une résine époxy modifiée par une résine d'urée-mélamine, une résine époxy modifiée par une résine de furfural, une résine époxy modifiée par une résine vinylique, une résine époxy modifiée par un isocyanate et une résine époxy modifiée par une résine de silicone ;
la résine phénolique hydrophobe est une ou plusieurs parmi une résine phénolique modifiée par du xylène, une résine phénolique modifiée par une résine époxy et une résine phénolique modifiée par du silicone.

5. Revêtement d'argile géosynthétique perméable à l'air selon l'une quelconque des revendications 1 à 4, **caractérisé en ce que** la particule perméable à l'air et imperméable est préparée par un procédé comprenant les étapes suivantes :
1) le chauffage de l'agrégat à une température de 50 °C à 400 °C ;
2) l'ajout du matériau organique hydrophobe et l'agitation uniforme pour que l'agrégat soit enrobé à sa surface afin d'obtenir une particule enrobée ;
3) le refroidissement, le broyage et le tamisage pour obtenir la particule perméable à l'air et imperméable.

6. Revêtement d'argile géosynthétique perméable à l'air selon la revendication 5, **caractérisé en ce que** l'étape 2) comprend en outre une étape d'ajout de la particule expansive à la particule enrobée ;
la particule expansive est présente en une quantité de 1 à 20 % du poids de l'agrégat ; et
la particule expansive a une taille de particule de 0,001 mm à 5 mm.

7. Revêtement d'argile géosynthétique perméable à l'air selon l'une quelconque des revendications 1 à 4, **caractérisé en ce que** la couche supérieure perméable à l'air (2) et/ou la couche inférieure perméable à l'air (1) sont constituées d'un ou plusieurs matériaux choisis parmi une fibre de polyester, le polyéthylène, le polypropylène, le poly(acide lactique) PLA, la polycaprolactone, le polyuréthane, le polyvinyl acétal, le triacétate de cellulose, une fibre de verre et le polytétrafluoroéthylène.

8. Revêtement d'argile géosynthétique perméable à l'air selon l'une quelconque des revendications 1 à 4, **caractérisé en ce que** la couche supérieure perméable à l'air (2) et la couche inférieure perméable à l'air (1) sont dotées d'une pluralité de points de liaison, et la couche supérieure perméable à l'air (2) et la couche inférieure perméable à l'air (1) sont reliées par fibre à chaque point de liaison.

9. Procédé de production du revêtement d'argile géosynthétique perméable à l'air selon l'une quelconque des revendications 1 à 8, **caractérisé en ce qu'**il comprend les étapes suivantes :
1) le dépôt d'une couche inférieure perméable à l'air (1) ;
2) le dépôt d'un mélange d'une particule perméable à l'air et imperméable et d'une particule expansive sur la couche inférieure perméable à l'air (1), et le grattage du mélange avec un grattoir (4) pour former une couche de sable perméable à l'air et imperméable (7) sur la surface de la couche inférieure perméable à l'air (1) ;
3) le dépôt d'une couche supérieure perméable à l'air (2) sur la couche de sable perméable à l'air et imperméable (7) ;
4) la liaison de manière fixe de la couche supérieure perméable à l'air (2), de la couche de sable perméable à l'air et imperméable (7) et de la couche inférieure perméable à l'air (1) par aiguilletage pour former un corps intégral, obtenant ainsi un revêtement d'argile géosynthétique perméable à l'air.

10. Procédé de production selon la revendication 9, **caractérisé par le fait qu'**une couche adhésive est appliquée sur la surface de la couche inférieure perméable à l'air (1), et/ou qu'une couche de laine est déposée sur la surface de la couche supérieure perméable à l'air (2) et/ou de la couche inférieure perméable à l'air (1) ;
de préférence, à l'étape 1), la couche adhésive est appliquée sur un rouleau rotatif (6), puis la couche inférieure perméable à l'air (1) est déposée sur le rouleau rotatif (6) et transportée vers l'avant avec le rouleau rotatif (6), de telle sorte que la couche adhésive est appliquée sur une surface inférieure de la couche inférieure perméable à l'air (1) .

11. Procédé de production selon la revendication 10, **caractérisé en ce que** la couche supérieure perméable à l'air (2) est une couche de tissu fibreux perméable à l'air, et la couche inférieure perméable à l'air (1) est une couche de tissu tissé ou une couche d'étoffe non tissée ; et
la couche adhésive est une colle respectueuse de l'environnement.

12. Procédé de production selon la revendication 10 ou 11, **caractérisé en ce que**
à l'étape 4), la couche supérieure perméable à l'air (2), la couche de sable perméable à l'air et imperméable (7) et la couche inférieure perméable à l'air (1) sont reliées de manière fixe par aiguilletage avec un fil hydrophobe pour former un corps intégral, obtenant ainsi un revêtement d'argile géosynthétique perméable à l'air ; ou
à l'étape 4), la fibre de la couche supérieure perméable à l'air (2) est amenée à la couche inférieure perméable à l'air (1) par aiguilletage, et fixée par la couche adhésive appliquée sur la couche inférieure perméable à l'air (1).

13. Procédé de production selon la revendication 9, **caractérisé en ce que**, à l'étape 4), la fibre de la couche supérieure perméable à l'air (2) est amenée à la couche inférieure perméable à l'air (1) par aiguilletage, et fixée dans la couche inférieure perméable à l'air (1).
